# EUROPÄISCHE PATENTSCHRIFT

(11) **EP 2 824 668 B1**
(45) Veröffentlichungstag und Bekanntmachung des Hinweises auf die Patenterteilung: **31.08.2016**
(21) Anmeldenummer: 13175980.5
(22) Anmeldetag: 10.07.2013
(51) Int. Cl.: G21F 5/008, G21C 19/08, G21C 19/06

(54) **Verfahren zur Trocknung eines in einem Brennstabköcher aufgenommenen Brennstabs**
Method for drying a fuel rod which is accommodated in a fuel rod sleeve
Procédé de séchage d'un crayon combustible logé dans un logement pour crayon combustible

(43) Veröffentlichungstag der Anmeldung: 14.01.2015
(73) Patentinhaber: GNS Gesellschaft für Nuklear-Service mbH, 45127 Essen (DE)
(72) Erfinder: Bannani, Armin, 40878 Ratingen (DE); Cebula, Wojciech, 42349 Wuppertal (DE); Hüggenberg, Roland, 44795 Bochum (DE); Kühl, Helmut, 52428 Jülich (DE)
(74) Vertreter: Rohmann, Michael

(56) Entgegenhaltungen:
- EP-A2- 0 061 819
- DE-A1- 3 226 986

## Beschreibung

Die Erfindung betrifft ein Verfahren zur Trocknung eines in einem Brennstabköcher aufgenommenen Brennstabs.

Verfahren der vorstehend genannten Art sind aus der Praxis grundsätzlich bekannt (siehe z.B. DE3226986).

Die Trocknung von Brennstäben ist insbesondere dann erforderlich, wenn defekte Brennstäbe, sogenannte Sonderbrennstäbe, über einen längeren Zeitraum hinweg, beispielsweise für mehr als 40 Jahre, gelagert werden sollen. Ein beschädigter Brennstab weist beispielsweise Deformierungen und/oder Risse in einem den radioaktiven Brennstoff beinhaltenden Hüllrohr auf. Im Rahmen der Lagerung eines Sonderbrennstabs in einem Abklingbecken kann Wasser durch Risse im Hüllrohr des Sonderbrennstabs in den Brennstoff bzw. in Kapillare eindringen, welche Kapillare in dem Brennstoff ausgebildet sind. Bei den aus der Praxis bekannten Verfahren hat es sich bewährt, einen Sonderbrennstab in ein Aufnahmerohr eines Brennstabköchers einzubringen und zur Entfernung des in den Sonderbrennstab eingedrungenen Wassers den Aufnahmeraum zu evakuieren. Es ist jedoch erstrebenswert, die Zuverlässigkeit bei der Entfernung von Wasser aus Sonderbrennstäben zur Vorbereitung einer trockenen Lagerung bzw. Zwischenlagerung zu verbessern. Bei der trockenen Zwischenlagerung ist der Brennstabköcher vorzugsweise in einem Castor^{®}-bzw. Constor^{®}-Behälter angeordnet.

Der Erfindung liegt daher das technische Problem zugrunde, ein Verfahren der vorstehend genannten Art anzugeben, das sich durch eine einfache Ausführbarkeit und hohe Leistungsfähigkeit auszeichnet und mit dem die im Zuge der Lagerung beispielsweise im Abklingbecken in den Sonderbrennstab eingedrungenen Wassermengen für die trockene Lagerung auf einen zulässigen Restwassergehalt reduziert werden können.

Zur Lösung des technischen Problems lehrt die Erfindung ein Verfahren gemäß Anspruch 1.

Es ist möglich, dass der Brennstab ein Hüllrohr aufweist, in welchem Hüllrohr der Brennstoff aufgenommen ist. Das Hüllrohr des Brennstabs kann Haarrisse und/oder Löcher, sogenannte Pin holes, aufweisen, welche Haarrisse und/oder Pin holes eine Größe im Bereich von beispielsweise 10 µm bis 100 µm aufweisen. Mit dem erfindungsgemäßen Verfahren zur Trocknung eines in einem Brennstabköcher aufgenommenen Brennstabs ist eine Trocknung der Brennstäbe, insbesondere der Sonderbrennstäbe durch solche Haarrisse und/oder Pin holes effektiv möglich. Im Rahmen des erfindungsgemäßen Verfahrens kann ein Brennstabköcher eingesetzt werden, der über einen Köcherdeckel, einen Köchermantel und einen Köcherboden verfügt, wobei der Brennstabköcher bevorzugt als geschmiedeter, monolithischer Körper ausgebildet ist. Der Köcherdeckel, der Köchermantel und der Köcherboden bilden dabei bevorzugt die Wandung des Brennstabköchers. Gemäß einer Ausführungsform ist in dem Köcherdeckel eine Deckelöffnung angeordnet, welche Deckelöffnung mit einem in die Deckelöffnung einschraubbaren Verschlusselement verschließbar ist.

Vorteilhafterweise ist das im Rahmen des erfindungsgemäßen Verfahrens vorgesehene Aufnahmerohr Bestandteil eines Aufnahmekorbs, welcher Aufnahmekorb vorzugsweise durch die Deckelöffnung in den Innenraum des Brennstabköchers eingebracht wird. Gemäß einer bevorzugten Ausführungsform weist der Aufnahmekorb eine Vielzahl von Aufnahmerohren auf. Zweckmäßigerweise wird jedes Aufnahmerohr bzw. jeder Aufnahmeraum eines Aufnahmerohrs in dem Trocknungsabschnitt evakuiert. Es empfiehlt sich, dass jedes Aufnahmerohr ein offenes Ende aufweist, welches offene Ende zur Evakuierung des Aufnahmeraums beispielsweise an eine Vakuumapparatur angeschlossen wird.

Der im Rahmen des erfindungsgemäßen Verfahrens getrocknete Brennstab kann ein defekter Brennstab sein (sogenannter Sonderbrennstab). Ein Sonderbrennstab weist beispielsweise Deformierungen und/oder Risse in einem den Brennstoff umgebenden Hüllrohr auf. Im Rahmen der Lagerung eines Sonderbrennstabs in einem Abklingbecken kann Wasser durch Risse im Hüllrohr in den Brennstoff und in in dem Brennstoff ausgebildete Kapillare eingedrungen sein.

Nach einer Ausführungsform des erfindungsgemäßen Verfahrens wird ein Verschlusselement aus der Deckelöffnung entfernt und zur Trocknung des Brennstabköchers durch einen Trocknungskopf ersetzt. Der Trocknungskopf ist mit der Maßgabe ausgebildet, dass ein offenes Ende eines Aufnahmerohrs bzw. die offenen Enden der Aufnahmerohre jeweils und vorzugsweise ausschließlich mit der Vakuumeinrichtung verbunden wird bzw. werden.

Es liegt im Rahmen der Erfindung, dass der Strömungsweg des Temperiermediums durch den Innenraum des Brennstabköchers getrennt von dem Aufnahmeraum des Aufnahmerohrs ausgebildet wird. Vorzugsweise wird die Temperatur des Temperiermediums mit einer Heizeinrichtung eingestellt. Gemäß einer Ausführungsform wird das Temperiermedium dem Innenraum bevorzugt durch einen ersten Temperiermediumkanal als temperiertes Temperiermedium zugeführt. Zweckmäßigerweise wird das Temperiermedium deckelseitig durch den ersten Temperiermediumkanal in den Innenraum des Brennstabköchers eingespeist und durch einen zweiten Temperiermediumkanal aus dem Innenraum ausgeleitet. Vorteilhafterweise strömt das Temperiermedium in eine köcherbodenseitige Öffnung des zweiten Temperiermediumkanals und wird nach dem Durchströmen des zweiten Temperiermediumkanals durch die Deckelöffnung vorzugsweise mittels des Trocknungskopfes zu der Heizungseinrichtung für das Temperiermedium zurückgefördert. Gemäß einer Ausführungsform wird in der Heizungseinrichtung das Temperiermedium auf eine vorgebbare Temperatur (Trocknungstemperatur) erwärmt und zweckmäßigerweise mittels des Trocknungskopfes in den Innenraum des Brennstabköchers eingeleitet.

Es liegt im Rahmen der Erfindung, dass die Temperatur des Temperiermediums in dem Trocknungsschritt mit der Maßgabe eingestellt wird, dass die Temperatur des Temperiermediums zumindest so hoch wie die Lagertemperatur des Brennstabköchers ist. Vorteilhafterweise ist die Temperatur des Temperiermediums in dem Trocknungsschritt höher als die Lagertemperatur des Brennstabköchers. Lagertemperatur meint insbesondere die Temperatur, bei der der Brennstabköcher nach dem Trocknen in einem Transportbehälter und/oder Lagerbehälter für beispielsweise 40 Jahre trocken zwischengelagert bzw. außerhalb eines Abklingbeckens gelagert wird. Während der trockenen Zwischenlagerung weist der Innenraum des Transport- und/oder Lagerbehälters und/oder der Innenraum des Brennstabköchers eine Lagertemperatur von beispielsweise ungefähr 60 °C bis 140 °C und vorzugsweise von ungefähr 80 °C bis 120 °C auf.

Gemäß einer Ausführungsform weist das Temperiermedium während der Durchführung des Trocknungsschrittes eine Temperatur von mindestens 30 °C und vorzugsweise von mindestens 60 °C auf. Gemäß einer bevorzugten Ausführungsform weist das Temperiermedium während der Durchführung des Trocknungsschrittes eine Temperatur von mindestens 100 °C und bevorzugt von mindestens 120 °C auf. Es hat sich bewährt, dass das Temperiermedium während der Durchführung des Trocknungsschrittes mit einer Temperatur von 140 °C bis 160 °C in den Innenraum des Brennstabköchers eingeleitet wird. Besonders bevorzugt beträgt die Temperatur des Temperiermediums bei der Einleitung in den Innenraum des Brennstabköchers während des Trocknungsschrittes 150 °C bzw. ungefähr 150 °C. Es hat sich als vorteilhaft herausgestellt, den Trocknungsschritt über eine minimale Trocknungszeit von mindestens 24 Stunden durchzuführen.

Empfohlenermaßen wird in einem Kontrollschritt ein in dem Aufnahmeraum des Aufnahmerohrs und/oder in dem Innenraum befindlicher Restwassergehalt überprüft, wobei vorzugsweise in dem Aufnahmeraum bzw. in dem Innenraum ein vorgebbarer Rohrdruck bzw. Innenraumdruck eingestellt und die zeitliche Veränderung des Rohrdrucks bzw. Innenraumdrucks erfasst wird. Vorzugsweise ist der vorgebbare Rohrdruck und/oder Innenraumdruck geringer als der Atmosphärendruck. Es liegt im Rahmen der Erfindung, dass in dem Kontrollschritt der vorgebbare Rohrdruck und/oder Innenraumdruck eingestellt wird und der Aufnahmeraum und/oder Innenraum fluiddicht verschlossen wird. Empfohlenermaßen wird eine Veränderung des Rohrdrucks in dem fluiddicht verschlossenen, den Brennstab aufnehmenden Aufnahmeraum und/oder des Innenraumdrucks des Innenraums gemessen. Beispielsweise kann mit dem Kontrollschritt eine Beendigung des Trocknungsschritts festgestellt werden, wenn in dem Kontrollschritt in dem Aufnahmeraum und/ oder Innenraum ein Druckanstieg feststellbar ist, welcher Druckanstieg geringer als eine vorgegebene, zulässige Druckänderung ist, vorzugsweise geringer als eine Druckänderung von bis zu 4 x 10⁻⁴ MPa pro 30 min.

Zweckmäßigerweise wird der Brennstabköcher mit einem Verschlusselement verschlossen, wenn die Veränderung des Rohrdrucks und/oder des Innenraumdrucks im Kontrollschritt unterhalb der zulässigen, zeitlichen Veränderung des Rohrdrucks des fluiddicht verschlossenen Aufnahmeraums und/oder der zulässigen, zeitlichen Veränderung des Innenraumdrucks des fluiddicht verschlossenen Innenraums liegt. Empfohlenermaßen wird der Trocknungskopf von dem Köcherdeckel unter Freigabe der Deckelöffnung entfernt und die Deckelöffnung wird mit dem Verschlusselement und vorzugsweise mit dem Schraubdeckel verschlossen. Es ist möglich, dass das Verschlusselement bzw. der Schraubdeckel einen Flansch (Kragen) aufweist, welcher Flansch auf einer der Innenraumseite abgewandten Stirnfläche des Köcherdeckels aufliegt, wenn das Verschlusselement vollständig in die Deckelöffnung eingeschraubt ist. Besonders bevorzugt wird das Verschlusselement und gemäß einer Ausführungsform der Flansch des Verschlusselements mit dem Köcherdeckel verschweißt.

Es hat sich bewährt, dass als Temperiermedium Luft und/oder Stickstoff eingesetzt wird. Zweckmäßigerweise ist das Temperiermedium erwärmte Luft bzw. Warmluft. Es ist möglich, dass mit dem Temperiermedium Wasser bzw. Feuchtigkeit aus dem Innenraum des Brennstabköchers in dem Trocknungsschritt ausgeschleppt wird. Das Temperiermedium kann als Schleppmittel in dem Trocknungsschritt fungieren.

Gemäß einer Ausführungsform wird in einem Vorbereitungsschritt Wasser aus dem Innenraum des Brennstabköchers entfernt, vorzugsweise abgepumpt und/oder mit einem Schleppgas ausgetragen. Besonders bevorzugt ist das Schleppgas identisch mit dem Temperiermedium. Zweckmäßigerweise wird in dem Vorbereitungsschritt eine Entwässerungslanze in den Innenraum des Brennstabköchers vorzugsweise durch den zweiten Temperiermediumkanal eingeführt und das in dem Innenraum befindliche Wasser wird durch die Entwässerungslanze abgesaugt.

Besonders bevorzugt wird zunächst der Vorbereitungsschritt und an den Vorbereitungsschritt anschließend der Trocknungsschritt ausgeführt. Grundsätzlich ist es möglich, dass lediglich der Trocknungsschritt ausgeführt wird.

Gemäß einer Ausführungsform des erfindungsgemäßen Verfahrens wird der Vorbereitungsschritt und/oder der Trocknungsschritt durchgeführt, wenn der Brennstabköcher unter Wasser aufbewahrt wird. Dass der Brennstabköcher unter Wasser aufbewahrt wird meint vorzugsweise, dass der Brennstabköcher in einem Lagerbecken bzw. Abklingbecken aufbewahrt wird. Es ist möglich, dass um den Brennstabköcher herum ein Isoliermantel gestülpt wird, wodurch vorzugsweise eine Erwärmung des Brennstabköchers unter Verdampfung des den Brennstabköcher umgebenden Wassers auf eine Temperatur von über 100°C ermöglicht wird. Zweckmäßigerweise ist der Isoliermantel mit der Maßgabe ausgelegt, dass das zwischen dem Isoliermantel und dem Brennstabköcher befindliche Wasser im Zuge des Trocknungsschritt zumindest teilweise verdampft werden kann.

Bevorzugt wird der Vorbereitungsschritt und/oder der Trocknungsschritt durchgeführt, wobei der Brennstabköcher außerhalb eines Wasserbeckens gehandhabt wird. Gemäß einer Ausführungsform des erfindungsgemäßen Verfahrens ist der Brennstabköcher während des Trocknungsschritts und/oder Vorbereitungsschritts von einer Luftatmosphäre bzw. Luft umgeben. Es empfiehlt sich, dass der Brennstabköcher aus einem Abklingbecken gehoben und nach einem Abtropfen in einem Abschirmblock gesichert wird. Nach dem Entfernen einer köcherdeckelseitigen Dichtplatte wird außerhalb des Wasserbeckens (Abklingbeckens) der Vorbereitungsschritt und/oder der Trocknungsschritt durchgeführt. Es empfiehlt sich, nach dem Ausführen des Vorbereitungsschritts und/oder Trocknungsschritts den Innenraum des Brennstabköchers mit Helium zu befüllen und/oder den Brennstabköcher mit dem Verschlusselement zu verschließen. Nach dem Trocknen des Innenraums des Brennstabköchers kann dieser in üblicher Weise in einen Transportbehälter und/oder Lagerbehälter eingesetzt werden.

Der Erfindung liegt die Erkenntnis zugrunde, dass mit dem erfindungsgemäßen Verfahren eine Trocknung eines Brennstabköchers bzw. eines in einem Brennstabköcher aufgenommenen Sonderbrennstabs zuverlässig möglich ist. Das erfindungsgemäße Verfahren zeichnet sich dabei durch eine sichere und einfache Ausführbarkeit aus. Es hat sich gezeigt, dass zum Beispiel Urandioxidpellets oder andere Kernbrennstoffpellets enthaltende Sonderbrennstäbe zuverlässig getrocknet werden können und beispielsweise auch in kapillare Strukturen bzw. durch vorliegende Hüllrohrleckagen eingedrungenes Wasser aus den Sonderbrennstäben zuverlässig entfernt werden kann. Gemäß einer Ausführungsform eignet sich das erfindungsgemäße Verfahren zur Trocknung eines in einem Brennstoffköcher aufgenommenen Brennstabs zur Trocknung von Mischoxidbrennstoffen (MOX-Brennstoffen) oder Brennstoff aus Wiederaufbereitungsanlagen. In besonders vorteilhafter Weise wird mit dem erfindungsgemäßen Verfahren bei einer Temperatur getrocknet, die oberhalb der Temperaturen während der anschließenden Lagerung liegen, so dass ein nachträgliches Ausgasen von Wasser aus den Sonderbrennstäben in den Brennstabköcher nicht bzw. in einem vernachlässigbaren Rahmen auftritt. Es hat sich gezeigt, dass Sonderbrennstäbe aus Druckwasserreaktoranlagen bis zu 50 g Wasser je Sonderbrennstab aufweisen können. Sonderbrennstäbe aus Siedewasserreaktoranlagen können bis zu 80 g Wasser enthalten. Mit dem erfindungsgemäßen Verfahren lassen sich Restwassermengen von weniger als 1 Gramm pro Brennstabköcher problemlos realisieren.

Nachfolgend wird die Erfindung anhand einer lediglich ein Ausführungsbeispiel darstellenden Zeichnung erläutert. Es zeigen schematisch:

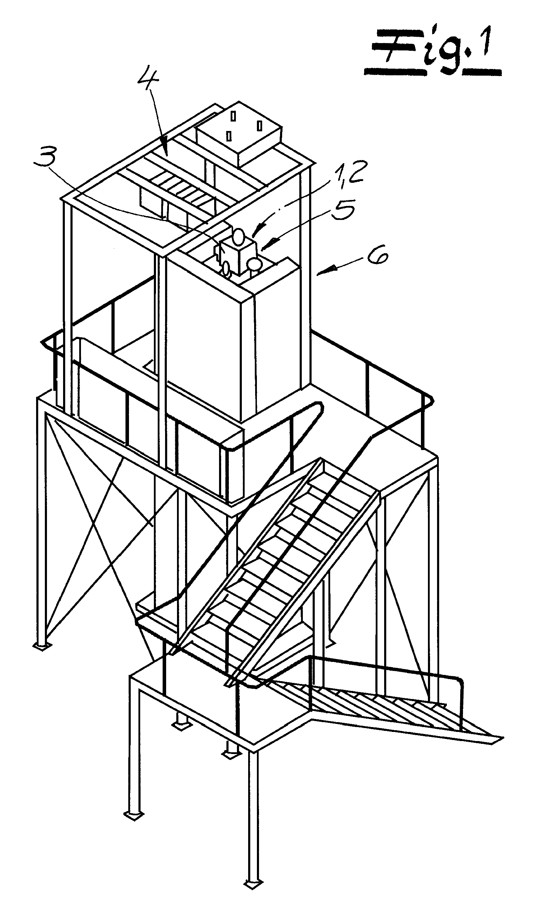

- Fig. 1: perspektivische Ansicht einer Trockenhandhabungsstation zur Durchführung des erfindungsgemäßen Verfahrens,
- Fig. 2: einen schematischen Schnitt durch einen Brennstabköcher während des Vorbereitungsschritts und
- Fig. 3: einen schematischen Schnitt durch den Brennstabköcher während des Trocknungsschritts.

Ein Brennstabköcher 1 wird in einem nicht dargestellten Abklingbecken unter Wasser in einen Abschirmkorb 2 eingesetzt, auf welchen Abschirmkorb 2 vorzugsweise und gemäß dem Ausführungsbeispiel eine Abschirmhaube 3 aufgesetzt wird. Mit einem Kran 4 wird der in dem Abschirmkorb 2 aufgenommene Brennstabköcher 1 aus dem Wasser des Abklingbeckens gehoben und nach dem Abtropfen von Restwasser in einen Abschirmblock 5 einer Trockenhandhabungsstation 6 eingesetzt und gegen ein Verkippen gesichert.

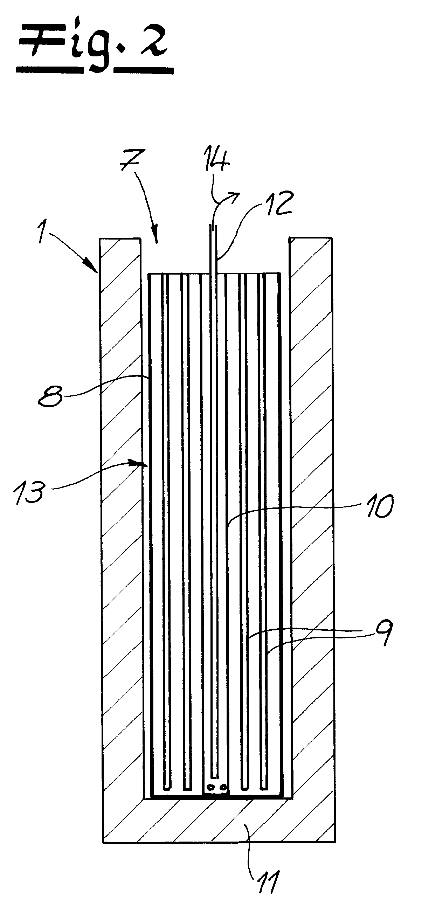

In Fig. 2 ist schematisch dargestellt, dass nach dem Entfernen der Abschirmhaube 3 und eines nicht dargestellten Verschlussdeckels eine Deckelöffnung 7 des Brennstabköchers 1 freigegeben wird. In der Fig. 2 ist erkennbar, dass in den Brennstabköcher 1 ein Aufnahmekorb 8 mit einer Vielzahl von Aufnahmerohren 9 für nicht dargestellte Brennstäbe angeordnet ist. In dem in Fig. 2 schematisch dargestellten Vorbereitungsschritt weist der Aufnahmekorb 8 ein Zentralrohr 10 auf, das sich ausgehend von einem deckelöffnungsseitigen Ende des Aufnahmekorbs 8 bis zu einem an einem Köcherboden 11 befindlichen Ende des Aufnahmekorbs 8 erstreckt. In das Zentralrohr 10 wird in einem Vorbereitungsschritt eine Entwässerungslanze 12 eingeführt. An seinem köcherbodenseitigen Ende weist das Zentralrohr 10 eine fluidleitende Verbindung mit einem Innenraum 13 des Brennstabköchers 1 auf. Durch den Pfeil 14 ist dargestellt, dass durch die Entwässerungslanze 12 in dem Innenraum 13 des Brennstabköchers 1 befindliches Wasser zu einer nicht dargestellten Pumpeinrichtung gefördert und somit aus dem Innenraum 13 des Brennstabköchers 1 entfernt wird.

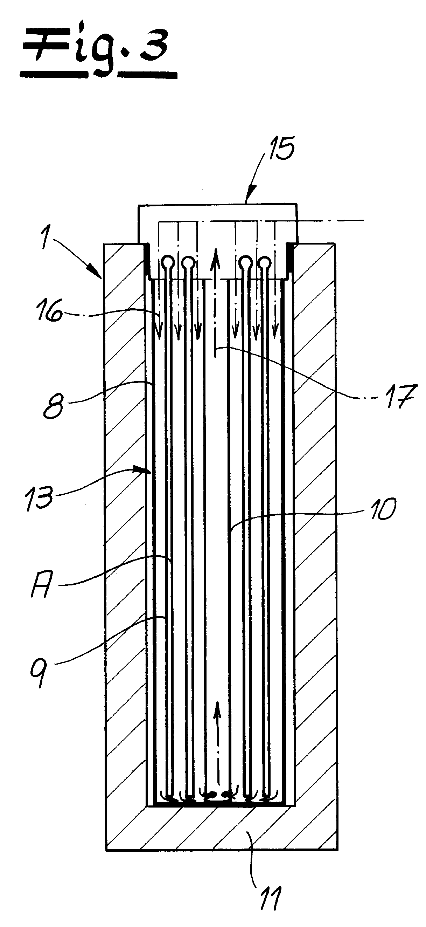

In Fig. 3 ist der Brennstabköcher 1 gemäß Fig. 2 dargestellt, wobei die Entwässerungslanze 12 aus dem Zentralrohr 10 entfernt ist und auf die Deckelöffnung 7 ein Trocknungskopf 15 aufgesetzt ist. Mittels des Trocknungskopfs 15 ist als Temperiermedium Warmluft in zwischen dem Brennstabköcher 1 bzw. einer Innenwand des Brennstabköchers 1 und dem Aufnahmekorb 8 ausgebildete Strömungskanäle bzw. erste Temperiermediumkanäle in den Innenraum 13 des Brennstabköchers 1 einleitbar. Dies ist durch die Pfeile 16 dargestellt. Die Warmluft wird dem Trocknungskopf 15 von einer nicht dargestellten Heizeinrichtung zugeführt. Die Warmluft wird über den Trocknungskopf 15 mit der Maßgabe in den Innenraum 13 des Brennstabköchers 1 eingeleitet, dass die Warmluft die Aufnahmerohre 9 von deren kopfseitigen bzw. deckelöffnungsseitigen Ende hin zu den fußseitigen bzw. bodenseitigen Enden umströmt. An einem bodenseitigen bzw. köcherbodenseitigen Ende des Aufnahmekorbs 8 wird die Warmluft umgelenkt und durch das Zentralrohr 10 und den Trocknungskopf 15 zu der Heizeinrichtung zurückgeführt, was durch den Pfeil 17 symbolisiert ist. Das Zentralrohr 10 stellt gemäß dem Ausführungsbeispiel einen zweiten Temperiermediumkanal dar. Vorzugsweise und gemäß dem Ausführungsbeispiel wird die Warmluft derart durch den Trocknungskopf 15 in den Innenraum 13 des Brennstabköchers 1 eingeführt, dass die Warmluft nicht in die die Brennstäbe aufnehmenden Aufnahmerohre 9 eindringt.

Der Trocknungskopf 15 ist an eine nicht dargestellte Vakuumeinrichtung angeschlossen, mit welcher Vakuumeinrichtung Aufnahmeräume A der Aufnahmerohre 9 des Aufnahmekorbs 8 evakuiert werden. Das Zusammenwirken des Trocknungskopfs 15 mit dem Brennstabköcher 1 und den Aufnahmerohren 9 des Aufnahmekorbs 8 bewirkt, dass die Aufnahmeräume A evakuierbar und unabhängig von der Druckabsenkung in den Aufnahmerohren 9 eine Temperierung der Aufnahmerohre 9 über das Temperiermedium bzw. die Warmluft erfolgt. Auf diese Weise lassen sich hohe Trocknungsraten unter Vermeidung des Austrags von Aktivität erzielen. Beispielsweise und gemäß dem Ausführungsbeispiel erfolgt die Trocknung des Innenraums 13 des Brennstabköchers 1 und des Aufnahmekorbs 8 bei einer Temperatur von 150 °C wobei die Restwassermenge in dem Innenraum 13 des Brennstabköchers 1 derart abgesenkt wird, dass der Brennstabköcher 1 nach einem Verschließen für eine dauerhafte Lagerung vorbereitet ist.

## Patentansprüche

1. Verfahren zur Trocknung eines in einem Brennstabköcher (1) aufgenommenen Brennstabs,
wobei in einem Innenraum (13) des Brennstabköchers (1) zumindest ein einseitig fluiddicht verschlossenes Aufnahmerohr (9) vorgesehen wird,
wobei ein Brennstab durch ein offenes Ende des Aufnahmerohrs (9) in einen Aufnahmeraum (A) des Aufnahmerohrs (9) eingesetzt wird,
wobei in einem Trocknungsschritt der Aufnahmeraum (A) des Aufnahmerohrs (9) vorzugsweise mit einer Vakuumeinrichtung evakuiert wird und der Brennstabköcher (1) und/oder der Innenraum (13) des Brennstabköchers (1) mit einem Temperiermedium erwärmt wird
und **dadurch gekennzeichnet, dass** das Temperiermedium das Aufnahmerohr (9) umströmend und temperierend in den Innenraum (13) des Brennstabköchers (1) eingespeist und nach dem Umströmen des Aufnahmerohrs als abgekühltes Temperiermedium aus dem Innenraum (13) des Brennstabköchers (1) ausgeleitet wird.

2. Verfahren nach Anspruch 1, wobei ein Strömungsweg des Temperiermediums durch den Innenraum (13) des Brennstabköchers (1) abgetrennt von dem Aufnahmeraum (A) des Aufnahmerohrs (9) ausgebildet ist.

3. Verfahren nach einem der Ansprüche 1 oder 2, wobei die Temperatur des Temperiermediums in dem Trocknungsschritt mit der Maßgabe eingestellt wird, dass die Temperatur des Temperiermediums zumindest so hoch wie die Lagertemperatur des Brennstabköchers ist.

4. Verfahren nach einem der Ansprüche 1 bis 3, wobei das Temperiermedium während der Durchführung des Trocknungsschrittes eine Temperatur von zumindest 30 °C, vorzugsweise von zumindest 60 °C aufweist.

5. Verfahren nach Anspruch 3, wobei das Temperiermedium während der Durchführung des Trocknungsschrittes eine Temperatur von zumindest 100 °C, vorzugsweise von zumindest 120 °C aufweist.

6. Verfahren nach einem der Ansprüche 1 bis 5, wobei in einem Kontrollschritt ein in dem Aufnahmeraum (A) des Aufnahmerohrs (9) und/oder in dem Innenraum (13) befindlicher Restwassergehalt überprüft wird, wobei in dem Aufnahmeraum (A) ein vorgebbarer Rohrdruck bzw. in dem Innenraum ein vorgebbarer Innenraumdruck eingestellt und die zeitliche Veränderung des Rohrdrucks bzw. Innenraumdrucks erfasst wird.

7. Verfahren nach Anspruch 6, wobei in dem Kontrollschritt der vorgegebene Rohrdruck und/oder Innenraumdruck eingestellt wird/werden und der Aufnahmeraum (A) und/oder Innenraum (13) fluiddicht verschlossen wird/werden.

8. Verfahren nach einem der Ansprüche 6 oder 7, wobei der Trocknungsschritt beendet und der Brennstabköcher (1) mit einem Verschlusselement verschlossen wird, wenn die Veränderung des Rohrdrucks bzw. Innenraumdrucks in dem Kontrollschritt unterhalb einer vorgegebenen, zeitlichen Veränderung des Rohrdrucks in dem fluiddicht verschlossenen Aufnahmerohr (9) bzw. unterhalb einer vorgegebenen, zeitlichen Veränderung des Innenraumdrucks liegt.

9. Verfahren nach einem der Ansprüche 1 bis 8, wobei als Temperiermedium Luft und/oder Stickstoff eingesetzt wird.

10. Verfahren nach einem der Ansprüche 1 bis 9, wobei in einem Vorbereitungsschritt Wasser aus dem Innenraum (13) des Brennstabköchers (1) entfernt, vorzugsweise abgepumpt und/oder mit einem Schleppgas ausgetragen wird.

11. Verfahren nach Anspruch 10, wobei in dem Vorbereitungsschritt eine Entwässerungslanze (12) in den Innenraum (13) eingeführt wird und wobei das in dem Innenraum (13) befindliche Wasser durch die Entwässerungslanze (12) abgesaugt wird.

12. Verfahren nach Anspruch 10 oder 11, wobei zunächst der Vorbereitungsschritt und dann der Trocknungsschritt ausgeführt werden.

13. Verfahren nach einem der Ansprüche 1 bis 12, wobei der Vorbereitungsschritt und/oder der Trocknungsschritt durchgeführt werden, wenn der Brennstabköcher (1) unter Wasser aufbewahrt wird.

14. Verfahren nach einem der Ansprüche 1 bis 12, wobei der Vorbereitungsschritt und/oder der Trocknungsschritt durchgeführt werden, wobei der Brennstabköcher (1) außerhalb eines Wasserbeckens gehandhabt wird.

## Claims

1. A method for drying a fuel rod accommodated in a fuel rod quiver (1),
wherein at least one accommodating pipe (9), which is closed in a fluid-tight manner on one side, is provided in an interior (13) of the fuel rod quiver (1),
wherein a fuel rod is inserted through an open end of the accommodating pipe (9) into an accommodating chamber (A) of the accommodating pipe (9),
wherein in a drying step, the accommodating chamber (A) of the accommodating pipe (9) is preferably evacuated using a vacuum device and the fuel rod quiver (1) and/or the interior (13) of the fuel rod quiver (1) is heated using a temperature control medium,
and **characterised in that**
the temperature control medium is fed into the interior (13) of the fuel rod quiver (1), circulating around the accommodating pipe (9), in a temperature controlling manner and, after circulating around the accommodating pipe, is discharged from the interior (13) of the fuel rod quiver (1) as cooled temperature control medium.

2. The method according to Claim 1, wherein a flow path of the temperature control medium through the interior (13) of the fuel rod quiver (1) is constructed separately from the accommodating chamber (A) of the accommodating pipe (9).

3. The method according to one of Claims 1 or 2, wherein the temperature of the temperature control medium is set in the drying step with the proviso that the temperature of the temperature control medium is at least as high as the storage temperature of the fuel rod quiver.

4. The method according to one of Claims 1 to 3, wherein the temperature control medium has a temperature of at least 30°C, preferably of at least 60°C whilst the drying step is carried out.

5. The method according to Claim 3, wherein the temperature control medium has a temperature of at least 100°C, preferably of at least 120°C whilst the drying step is carried out.

6. The method according to one of Claims 1 to 5, wherein in a checking step, a residual water content located in the accommodating chamber (A) of the accommodating pipe (9) and/or in the interior (13) is checked, wherein a predeterminable pipe pressure is set in the accommodating chamber (A) or a predeterminable interior pressure is set in the interior and the temporal change of the pipe pressure or interior pressure is detected.

7. The method according to Claim 6, wherein in the checking step, the predetermined pipe pressure and/or interior pressure is/are set and the accommodating chamber (A) and/or interior (13) is/are closed in a fluid-tight manner.

8. The method according to one of Claims 6 or 7, wherein the drying step is ended and the fuel rod quiver (1) is closed with a closure element, if the change of the pipe pressure or interior pressure in the checking step is below a predetermined, temporal change of the pipe pressure in the accommodating pipe (9) that is closed in a fluid-tight manner or below a predetermined, temporal change of the interior pressure.

9. The method according to one of Claims 1 to 8, wherein air and/or nitrogen is used as temperature control medium.

10. The method according to one of Claims 1 to 9, wherein in a preparatory step, water is removed from the interior (13) of the fuel rod quiver (1), preferably pumped out and/or discharged using a carrier gas.

11. The method according to Claim 10, wherein in the preparatory step, a drainage lance (12) is introduced into the interior (13) and wherein the water located in the interior (13) is sucked away by means of the drainage lance (12).

12. The method according to Claim 10 or 11, wherein initially the preparatory step and then the drying step are executed.

13. The method according to one of Claims 1 to 12, wherein the preparatory step and/or the drying step are carried out when the fuel rod quiver (1) is stored underwater.

14. The method according to one of Claims 1 to 12, wherein the preparatory step and/or the drying step are carried out, wherein the fuel rod quiver (1) is handled outside of a water pond.

## Revendications

1. Procédé destiné à sécher un crayon combustible logé dans un étui pour crayon combustible (1),
dans un espace intérieur (13) de l'étui pour crayon combustible (1) étant prévu au moins un tube de logement (9) fermé d'un côté de manière étanche aux fluides,
un crayon combustible étant introduit à travers une extrémité ouverte du tube de logement (9) dans un espace de logement (A) du tube de logement (9),
lors d'une étape de séchage, l'espace de logement (A) du tube de logement (9) étant évacué de préférence à l'aide d'un dispositif à dépression et l'étui pour crayon combustible (1) et/ou l'espace intérieur (13) de l'étui pour crayon combustible (1) étant chauffé à l'aide d'un agent d'équilibrage des températures,
et **caractérisé en ce que**
l'agent d'équilibrage des températures est alimenté en s'écoulant autour du tube de logement (9) et de manière à tempérer dans l'espace intérieur (13) de l'étui pour crayon combustible (1) et après l'écoulement autour du tube de logement, est évacué en tant qu'agent d'équilibrage des températures refroidi hors de l'espace intérieur (13) de l'étui pour crayon combustible (1).

2. Procédé selon la revendication 1, un trajet d'écoulement de l'agent d'équilibrage des températures à travers l'espace intérieur (13) de l'étui pour crayon combustible (1) étant conçu en étant séparé de l'espace de logement (A) du tube de logement (9).

3. Procédé selon l'une quelconque des revendications 1 ou 2, la température de l'agent d'équilibrage des températures étant réglée lors de l'étape de séchage avec le critère que la température de l'agent d'équilibrage des températures soit au moins aussi élevée que la température de stockage de l'étui pour crayon combustible.

4. Procédé selon l'une quelconque des revendications 1 à 3, pendant la réalisation de l'étape de séchage, l'agent d'équilibrage des températures présentant une température d'au moins 30 °C, de préférence d'au moins 60 °C.

5. Procédé selon la revendication 3, pendant la réalisation de l'étape de séchage, l'agent d'équilibrage des températures présentant une température d'au moins 100 °C, de préférence d'au moins 120 °C.

6. Procédé selon l'une quelconque des revendications 1 à 5, lors d'une étape de contrôle, une teneur en eau résiduelle se trouvant dans l'espace de logement (A) du tube de logement (9) et/ou dans l'espace intérieur (13) étant vérifiée, dans l'espace de logement (A) étant réglée une pression prédéfinissable du tube ou dans l'espace intérieur étant réglée une pression prédéfinissable de l'espace intérieur et la variation dans le temps de la pression du tube ou de la pression de l'espace intérieur étant détectée.

7. Procédé selon la revendication 6, lors de l'étape de contrôle, la pression prédéfinie du tube et/ou de l'espace intérieur étant réglée(s) et l'espace de logement (A) et/ou l'espace intérieur (13) étant fermé(s) de manière étanche aux fluides.

8. Procédé selon l'une quelconque des revendications 6 ou 7, l'étape de séchage étant achevée et l'étui pour crayon combustible (1) étant fermé à l'aide d'un élément de fermeture lorsque, lors de l'étape de contrôle, la variation de la pression du tube ou de la pression de l'espace intérieur est inférieure à une variation prédéfinie dans le temps de la pression du tube dans le tube de logement (9) fermé de manière étanche aux fluides ou inférieure à une variation prédéfinie dans le temps de la pression de l'espace intérieur.

9. Procédé selon l'une quelconque des revendications 1 à 8, en tant qu'agent d'équilibrage de la température étant mis en oeuvre de l'air et/ou de l'azote.

10. Procédé selon l'une quelconque des revendications 1 à 9, lors d'une étape de préparation, de l'eau étant retirée, de préférence pompée hors de l'espace intérieur (13) de l'étui pour crayon combustible (1) et/ou évacuée à l'aide d'un gaz vecteur.

11. Procédé selon la revendication 10, lors de l'étape de préparation, une lance d'assèchement (12) étant introduite dans l'espace intérieur (13) et l'eau se trouvant dans l'espace intérieur (13) étant aspirée par la lance d'assèchement (12).

12. Procédé selon la revendication 10 ou la revendication 11, d'abord l'étape de préparation et ensuite l'étape de séchage étant réalisées.

13. Procédé selon l'une quelconque des revendications 1 à 12, l'étape de préparation et/ou l'étape de séchage étant réalisées lorsque l'étui pour crayon combustible (1) est conservé sous l'eau.

14. Procédé selon l'une quelconque des revendications 1 à 12, l'étape de préparation et/ou l'étape de séchage étant réalisées lorsque l'étui pour crayon combustible (1) est manipulé hors d'une cuve d'eau.
